# EUROPEAN PATENT APPLICATION

(11) **EP 4 109 733 A1**
(43) Date of publication of application: **28.12.2022**
(21) Application number: 20919518.9
(22) Date of filing: 06.11.2020
(51) Int. Cl.: H02M 7/12

(54) **CONVERTER DEVICE AND POWER CONVERSION SYSTEM**

(30) Priority: 20.02.2020 JP 2020027204
(71) Applicant: Hitachi Industrial Equipment Systems Co., Ltd., Tokyo 101-0021 (JP)
(72) Inventor: IWASE, Yuuta, Tokyo 101-0022 (JP); TAGUCHI, Yoshiyuki, Tokyo 101-0022 (JP)
(74) Representative: MERH-IP Matias Erny Reichl Hoffmann Patentanwälte PartG mbB
(86) International application number: PCT/JP2020/041505
(87) International publication number: WO 2021/166335

(57) **Abstract**

A highly-versatile converter apparatus capable of suppressing a harmonic wave current when being combined with various power conversion systems and a power conversion system including the converter apparatus are provided. Accordingly, a converter apparatus 4 includes: external terminals Pp and Pn; smoothing capacitors C1 and C2; a current detector 8; bidirectional current-carrying switches of three phases SW(r, s and t); and a converter controller 7. The bidirectional current-carrying switches of three phases SW(r, s and t) are arranged between a midpoint node Nm of the smoothing capacitors C1 and C2 and one end of a three-phase alternating-current reactor 2. The converter controller 7 includes an activation determiner comparing a preset activation determination value and a current value of the three-phase current detected by the current sensor 8, and outputting an internal activation signal when the current value exceeds the activation detection value, and the converter controller enables switching control on the bidirectional current-carrying switches of three phases SW(r, s and t) in response to the internal activation signal.

## Description

### TECHNICAL FIELD

The present invention relates to a converter apparatus and a power conversion system, and relates to, for example, a technique for suppressing harmonic waves.

### BACKGROUND ART

For example, a Patent Document 1 describes a method in a power conversion apparatus for converting a three-phase alternating current to a direct current, the method reducing a harmonic wave component of a power supply current by switching bidirectional current-carrying switches corresponding to a phase at an intermediate potential of a three-phase power supply to turn ON the switch before and after a voltage of the intermediate potential becomes 0.

### RELATED ART DOCUMENT

### PATENT DOCUMENT

Patent Document 1: Japanese Patent Application Laid-Open Publication No. 2012-60801

### SUMMARY OF THE INVENTION

### PROBLEMS TO BE SOLVED BY THE INVENTION

For example, in various industrial fields typified by freezing equipment, power conversion systems that drive three-phase alternating-current motors or others have been popularized. In such a system, a three-phase diode bridge is generally used for converting a received three-phase alternating-current power supply to a direct current. However, in this case, a lot of harmonic waves adversely occur in the power supply current, and its adverse influence on a power grid is a social problem. Accordingly, in recent years, harmonic wave regulations such as harmonic wave regulations (IEC61000-3-2 (Phase Current < 16 A)) and IEC61000-3-12 (16 A < Phase Current < 75 A)) of IEC (International Electrotechnical Commission) have been established in Europe, China, Japan and others.

In order to satisfy such harmonic wave regulations, for example, a converter apparatus (that is a PFC (Power Factor Correction) unit) for suppressing the harmonic wave current may be desirable to be embedded to an existing system including a three-phase alternating-current power supply, a three-phase diode bridge and a smoothing capacitor. The PFC unit is desirably operated when a certain electric current based on the harmonic wave regulations flows in an operating load connected beyond the smoothing capacitor.

Here, as shown in the Patent Document 1 and others, in the system to which the PFC unit is previously and integrally embedded, the PFC unit is allowed to be activated based on, for example, the load current of the load. However, when the PFC unit is desirable to be added afterwards to the system, there is a risk of disabling the PFC unit to be appropriately activated. It may be difficult to appropriately activate the PFC unit if, for example, the existing system does not include a mechanism capable of previously detecting the load current and outputting a result of the detection.

The present invention has been made in consideration of this point, and one objective of the present invention is to provide a highly-versatile converter apparatus capable of suppressing the harmonic wave current when being combined with each of various power conversion systems, and provide a power conversion system including the converter apparatus.

The above and other objectives and novel characteristics of the present invention will be apparent from the description of the present specification and the accompanying drawings.

### MEANS FOR SOLVING THE PROBLEMS

The summary of the typical aspects of the embodiments disclosed in the present application will be briefly explained below.

A converter apparatus according to a typical embodiment of the present invention is applied to a power conversion system including: a three-phase diode bridge rectifying a three-phase alternating-current power supply received; and a three-phase alternating-current reactor inserted in a current path between the three-phase alternating-current power supply and the three-phase diode bridge, and suppresses the harmonic wave current occurring in the three-phase alternating-current power supply. This converter apparatus includes: first and second external terminals; first and second smoothing capacitors; a current sensor; bidirectional current-carrying switches of three phases; and a converter controller. The first and second external terminals are connected to a pair of output nodes of the three-phase diode bridge, respectively. The first smoothing capacitor is connected between the first external terminal and a midpoint node, and the second smoothing capacitor is connected between the second external terminal and the midpoint node. The current sensor detects a three-phase current of the three-phase alternating-current power supply. The bidirectional current-carrying switches of the three phases are arranged between the midpoint node and a node of the three-phase alternating-current reactor close to the three-phase diode bridge, respectively. The converter controller includes an activation determiner that compares a preset activation determination value and a current value of the three-phase current detected by the current sensor and that outputs an internal activation signal when this current value exceeds the activation determination value, and the converter controller enables switching control on the bidirectional current-carrying switches of the three phases in response to the internal activation signal.

### EFFECTS OF THE INVENTION

The effects obtained by the typical embodiment of the invention disclosed in the present application will be briefly described as below. A highly-versatile converter apparatus capable of suppressing a harmonic wave current when being combined with each of various power conversion systems can be achieved.

### BRIEF DESCRIPTIONS OF THE DRAWINGS

FIG. 1 is a schematic diagram showing a configuration example of a power conversion system according to a first embodiment of the present invention;
FIG. 2 is a circuit diagram showing a detailed configuration example of a bidirectional switch circuit in FIG. 1;
FIG. 3 is a block diagram showing a configuration example of a converter controller in FIG. 1;
FIG. 4 is a diagram showing a detailed configuration example of a power-supply voltage phase calculator in FIG. 3;
FIG. 5 is a timing chart showing an operation example of the power-supply voltage phase calculator in FIG. 4;
FIG. 6 is a diagram showing a detailed configuration example of a current controller in FIG. 3;
FIG. 7 is a diagram showing a modification example of FIG. 6;
FIG. 8 is a circuit diagram showing a configuration example of a general voltage rising circuit;
FIG. 9 is a diagram resulted from picking up a voltage rising circuit portion from the power conversion system in FIG. 1; and
FIG. 10 is a block diagram showing a configuration example of the converter controller in FIG. 1 in a converter apparatus according to a second embodiment of the present invention.

### BEST MODE FOR CARRYING OUT THE INVENTION

Hereinafter, embodiments of the present invention will be described in detail with reference to the accompanying drawings. Note that the same components are denoted by the same reference signs in principle throughout all the drawings for describing the embodiments, and the repetitive description thereof will be omitted.

### (First Embodiment)

### <Outline of Power Conversion System>

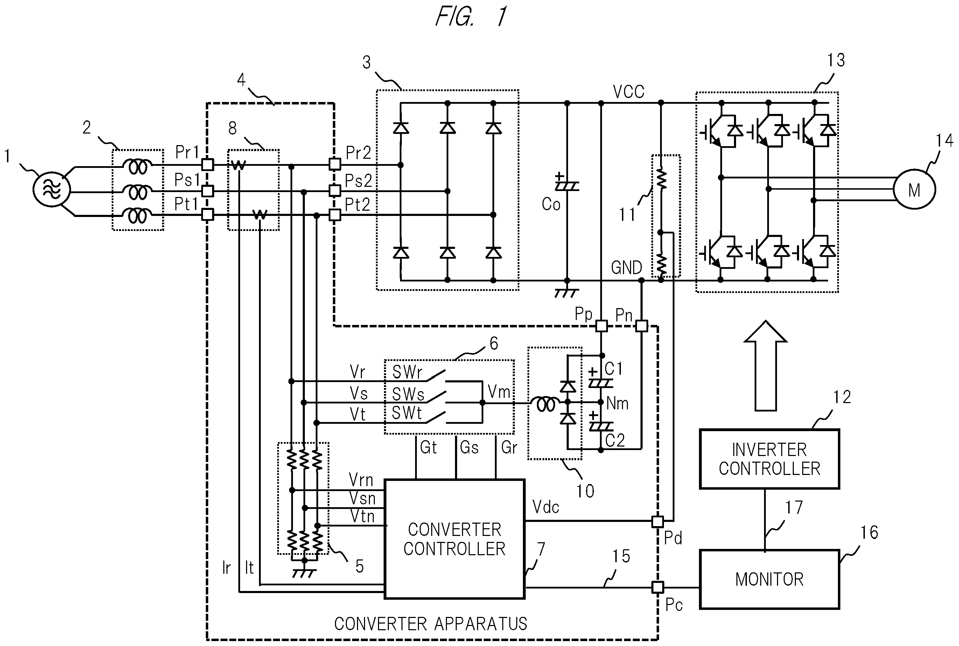

FIG. 1 is a schematic diagram showing a configuration example of a power conversion system according to a first embodiment of the present invention. The power conversion system shown in FIG. 1 includes a three-phase alternating-current reactor 2, a three-phase diode bridge 3, a smoothing capacitor Co, a converter apparatus 4, a direct-current voltage detector (voltage sensor) 11, an inverter 13, an inverter controller 12 and a monitor 16. The three-phase alternating-current reactor 2 is inserted in a current path between the three-phase alternating-current power supply 1 and the three-phase diode bridge 3 to smooth the power supply current. The three-phase diode bridge 3 performs full-wave rectification to the received three-phase alternating-current power supply 1 through the three-phase alternating-current reactor 2. The smoothing capacitor Co smooths an output voltage (an output voltage VCC that is on a positive electrode side while a ground voltage GND is on a negative electrode side) of the three-phase diode bridge 3.

The direct-current voltage detector (voltage sensor) 11 detects the voltage (output voltage VCC) of the output node of the three-phase diode bridge 3 by using a resistor division technique, and outputs a voltage detection signal Vdc. The inverter 13 includes a plurality of switching elements, and converts the direct-current voltage (output voltage VCC) generated in the output node of the three-phase diode bridge 3 to a three-phase alternating-current voltage. And, the inverter 13 drives a three-phase alternating-current electric motor 14 (such as a motor for a freezing machine) at this three-phase alternating-current voltage.

The converter apparatus 4 has a function of suppressing the harmonic wave current occurring in the three-phase alternating-current power supply 1, a function of controlling the output voltage VCC (voltage rising function) and others although described in later. In this example, the load to which the output voltage (direct-current voltage) VCC of the three-phase diode bridge 3 is supplied is the inverter 13. However, the present invention is not limited to this, and this may be various load apparatuses consuming the direct-current power, and may be, for example, a direct-current motor or others.

The monitor 16 is mounted on, for example, an upper-stream apparatus such as a personal computer, and monitors an operation state of the inverter controller 12 (and a converter controller 7 described later). The monitor 16 communicates with the inverter controller 12 (the converter controller 7) through communication paths 17 and 15 based on standards of wired communication such as RS-232C, RS-422, RS-485, USB and Ethernet and standards of wireless communication such as Bluetooth (registered trademark) and Wi-Fi.

The inverter controller 12 is made of, for example, a microcontroller (abbreviated as microcontroller) and others. The inverter controller 12 generates, for example, a PWM (Pulse Width Modulation) signal based on an operation command and a speed command input from the monitor 16, and performs switching control on the plurality of switch elements in the inverter 13 by using this PWM signal.

### <Details of Converter Apparatus>

The converter apparatus (in other words, the PFC unit) 4 is made of, for example, one wiring board on which various components are mounted, and is made as an apparatus independent from the inverter apparatus including the inverter controller 12 and the inverter 13. The converter apparatus 4 includes external terminals Pr1, Ps1 and Pt1, external terminals Pr2, Ps2 and Pt2, external terminals Pp and Pn, an external terminal Pd and an external terminal Pc.

The external terminals Pr1, Ps1 and Pt1 and the external terminals Pr2, Ps2 and Pt2 are sequentially arranged to be inserted in the current path between the three-phase alternating-current reactor 2 and the three-phase diode bridge 3. The external terminals Pp and Pn are connected to a pair of (positive-electrode side and negative-electrode side) output nodes of the three-phase diode bridge 3, respectively. The voltage detection signal Vdc is input from the direct-current voltage detector (voltage sensor) 11 to the external terminal Pd. The external terminal Pc is a communication terminal between itself and the monitor 16.

The converter apparatus 4 includes a voltage phase detector 5, a bidirectional switch circuit 6 including bidirectional current-carrying switches SWr, SWs and Swt of three phases, the converter controller 7, the current detector (current sensor) 8, a snubber circuit 10, and smoothing capacitors C1 and C2. The current detector 8 is arranged between the external terminals Pr1, Ps1 and Pt1 and the external terminals Pr2, Ps2 and Pt2, and detects the three-phase current of the three-phase alternating-current power supply 1. The current detector 8 is made of, for example, a shunt resistor element, a current transformer (CT) or others, and detects phase currents of an R phase and a T phase, and outputs a current detection signal Ir of the R phase and a current detection signal It of the T phase.

The smoothing capacitor C1 is connected between the external terminal Pp and a midpoint node Nm, and the smoothing capacitor C2 is connected between the external terminal Pn and the midpoint node Nm. The bidirectional current-carrying switches SWr, SWs and SWt of the three phases are arranged between the midpoint node Nm and nodes of the three-phase alternating-current reactor 2 close to the three-phase diode bridge 3, respectively. More specifically, each of one ends of the bidirectional current-carrying switches SWr, SWs and SWt of the three phases is connected to each of the external terminals Pr2, Ps2 and Pt2, and is connected to each of the external terminals Pr1, Ps1 and Pt1 through the current sensor 8. Each of other end the bidirectional current-carrying switches SWr, SWs and SWt of the three phases is connected to the midpoint node Nm through the snubber circuit 10 made of an inductor and a plurality of diodes.

The voltage phase detector 5 is connected to the external terminals Pr2, Ps2 and Pt2, and outputs voltage phase signals Vrn, Vsn and Vtn for detecting the voltage phase of the three-phase alternating-current power supply 1 by performing resistance division to each voltage of the external terminals Pr2, Ps2 and Pt2. The converter controller 7 is made of, for example, a microcomputer or others. The converter controller 7 receives the voltage phase signals Vrn, Vsn and Vtn, current detection signals Ir and It, a voltage detection signal Vdc output from an external terminal Pd and various signals output from an external terminal Pc as inputs, and performs switching control on the bidirectional current-carrying switches SWr, SWs and SWt in response to PWM signals Gr, Gs and Gt, respectively.

Note that the converter apparatus 4 may be configured to include either one or both of the three-phase alternating-current reactor 2 and the three-phase diode bridge 3 in some cases. In this case, positions of the external terminals Pr1, Ps1, Pt1, Pr2, Ps2 and Pt2 may appropriately vary depending on the configuration.

### <Details of Bidirectional Switch Circuit>

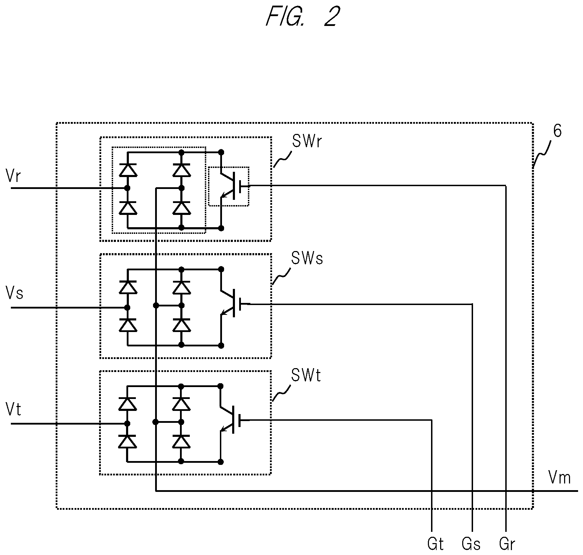

FIG. 2 is a circuit diagram showing a detailed configuration example of the bidirectional switch circuit in FIG. 1. In FIG. 2, each of the bidirectional current-carrying switches SWr, SWs and SWt of the three phases is made of a single-phase diode bride and an IGBT (Insulated Gate Bipolar Transistor). Switching control on the respective IGBTs in the bidirectional current-carrying switches SWr, SWs and SWt is performed by the PWM signals Gr, Gs and Gt, respectively. Note that the bidirectional current-carrying switches SWr, SWs and SWt are not limited to such a configuration. Different configurations and semiconductor elements are also applicable if they are controlled to be turned ON/OFF in response to the PWM signals Gr, Gs and Gt output from the converter controller 7.

### <Details of Converter Controller>

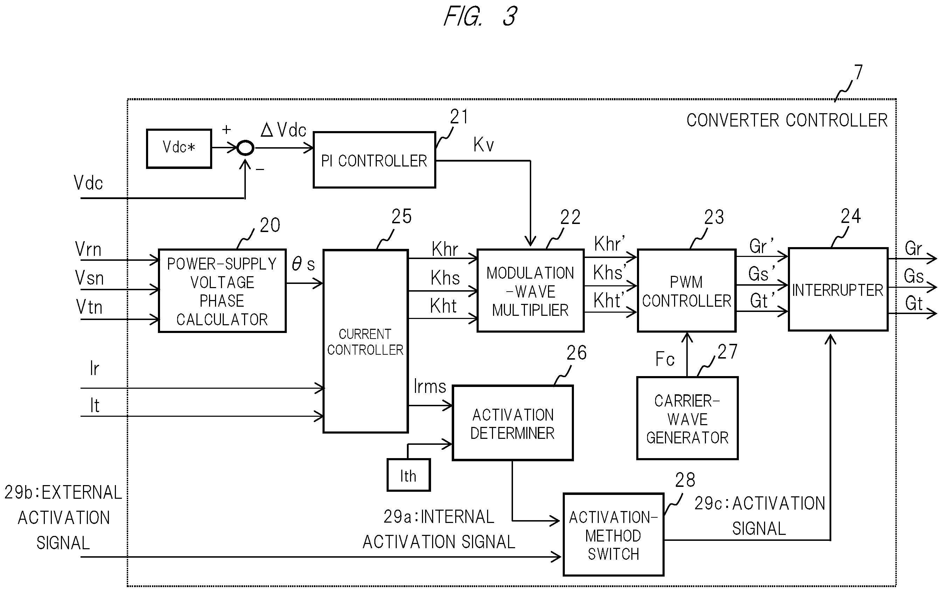

FIG. 3 is a block diagram showing a configuration example of the converter controller in FIG. 1. The converter controller 7 shown in FIG. 3 includes a power-supply voltage phase calculator 20, a PI controller 21, a modulation-wave multiplier 22, a PWM controller 23, an interrupter 24, a current controller 25, an activation determiner 26, a carrier-wave generator 27 and an activation-method switch 28. Each block of these components is mainly implemented by a CPU (Central Processing Unit) in the microcomputer through a program processing, and is achieved by appropriately using an analog-digital converter, a timer and others in the microcomputer during the program processing.

However, each block of the converter controller 7 is not limited to be made of the microcomputer, but may be partially or entirely made of a hardware such as FPGA (Field Programmable Gate Array), ASIC (Application Specific Integrated Circuit) or others. Each block of the converter controller 7 is not limited to be made of the CPU, but may be mounted by a program processing using DSP (Digital Signal Processor) or others. As described above, each block of the converter controller 7 may be appropriately made of a hardware, a software or combination thereof.

By using each of such blocks, the converter controller 7 performs the switching control on the bidirectional current-carrying switches SWr, SWs and SWt inside the bidirectional switch circuit 6 to bring a phase error between a voltage phase and a current phase of the three-phase alternating-current power supply 1 to be substantially zero. As a result, the converter controller 7 improves the power factor, and suppresses the high harmonic current. In this case, the converter controller 7 can also perform the control to make the output voltage (direct-current voltage) VCC constant while monitoring the voltage detection signal Vdc.

### <<Regarding Power-Supply Phase Detection>>

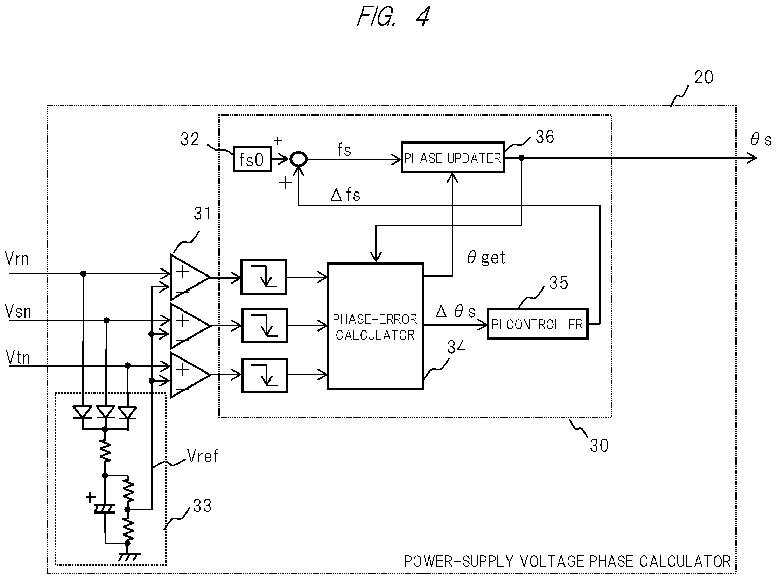

FIG. 4 is a diagram showing a detailed configuration example of the power-supply voltage phase calculator in FIG. 3. and substantially generates an internal phase θs synchronizing with the voltage phase of the three-phase alternating-current power supply 1. The voltage divider circuit 33 generates a reference voltage Vref by using an average value of the voltage phase signals Vrn, Vsn and Vtn of the three phases output from voltage phase detector 5. The comparator circuit 31 compares the voltage phase signals Vrn, Vsn and Vtn and the reference voltage Vref, and converts the comparison result to a pulse signal. The internal-phase generator 30 includes a basic power-supply frequency setting portion 32, a phase error calculator 34, a PI controller 35 and a phase updater 36, detects a timing (referred to as edge below) at which the pulse signal output from the comparator circuit 31 changes, and generates the internal phase "θs".

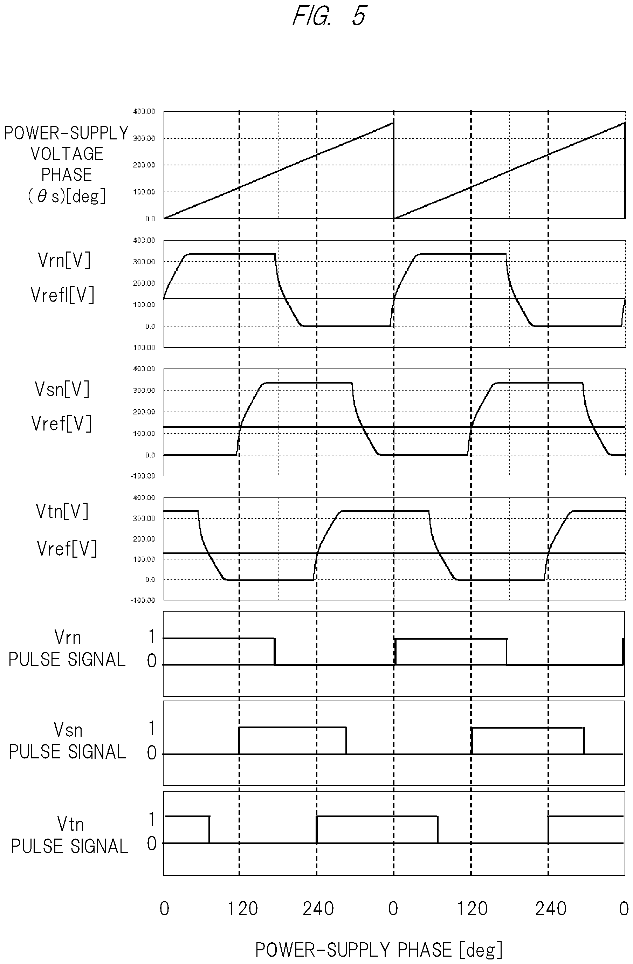

FIG. 5 is a timing chart showing an operation example of the power-supply voltage phase calculator in FIG. 4. As shown in FIG. 5, it is understood that the pulse signal is turned ON/OFF in accordance with the power-supply voltage phase. For example, when the power-supply phase is 0 degree, the pulse signal Vrn becomes a rising edge. When the power-supply phase is 120 degrees, the pulse signal Vsn becomes the rising edge. This relation varies depending on a magnitude of the reference voltage Vref. However, since the voltage divider circuit 33 generates the average value among the three phases, influence of the variation of the power-supply voltage is difficult to occur.

In the internal-phase generator 30 of FIG. 4, the phase updater 36 generates the internal phase θs in accordance with a frequency command value "fs". Specifically, as shown in FIG. 5, the internal phase θs is, for example, a count value of a counter or others that repeats a count operation of "360 × N" at a power-supply frequency (a power-supply phase cycle of an electric angle of 360 degrees) . The frequency command value fs represents a count speed of this counter or others.

The phase-error calculator 34 generates a phase update setting value θget for every timing of detection of the pulse signal edges of the voltage phase signals Vrn, Vsn and Vtn (in this example, every 60-degree electrical angle of the power-supply phase cycle). The phase update setting value θget represents a count value to be originally expected, and is a value of "60 × N", "120 × N", ... for every 60-degree electrical angle. Also, the phase error calculator 34 detects a phase error Δθs between the internal phase θs (that is the practical count value) output from the phase updater 36 and the phase update setting value θget (that is the count value to be originally expected).

The PI controller 35 calculates a frequency correction value Δfs for bringing the phase error Δθs to be zero by using PI (proportion, integration) control. The frequency command value fs is updated by a summation value of the frequency correction value Δfs and a defined power-supply frequency setting value fs0 (such as a value of 50 to 60 Hz) output from the basic power-supply frequency setting portion 32, and, in this example, is updated for every 60-degree electrical angle. The phase updater 36 updates the internal phase θs by using the phase update setting value θget for every 60-degree electrical angle, and performs the count operation at the speed based on the frequency command value fs.

In this example, note that the calculation is executed for every 60-degree electrical angle while both edges are used. However, the process may be performed while either one edge (either a falling edge or a rising edge of the edges) is used. In this manner, the calculation is executed for every 120-degree electrical angle, and therefore, process load on the microcomputer or others can be reduced. Alternatively, both the falling edge and the rising edge of not all three phases but two phases may be used. In this manner, a cost can be reduced because of the reduced process load on the microcomputer or others and removal of a circuit for one phase.

Further, in order to prevent fluctuation due to noises or others, for example, the calculation may be executed for every 360-degree electrical angle. Specifically, the phase error Δθs for every 60-degree electrical angle may be averaged at the 360-degree electrical angle, and the frequency correction value Δfs may be calculated by using this average value. Note that the power-supply frequency setting value fs0 of 50 or 60 Hz is previously set in the basic power-supply frequency setting portion 32. In this case, even when the power-supply frequency setting value fs0 of, for example, 55 Hz is set, a predetermined frequency correction value Δfs (such as ±5 Hz) is acquired. As a result, this case can handle both of 50 Hz and 60 Hz. The power-supply frequency setting value fs0 can be also configured to be automatically set when an interval of the pulse signal edges is measured by the timer of the microcomputer or others.

An anomaly detector that detects anomaly based on a signal of the power-supply voltage phase calculator 20 of FIG. 4 can be also separately provided. As shown in FIG. 5, in the power-supply voltage phase calculator 20, the pulse signals of the voltage phase signals Vrn, Vsn and Vtn are generated. The anomaly detector can detect the anomaly such as three-phase imbalance of the power supply and power-supply phase lack by comparing and determining balance of the edge interval for each edge of each pulse signal or others.

### <<Current Detection>>

The current controller 25 of FIG. 3 determines duty-ratio command values (Khr, Khs and Kht) of the PWM signals Gr, Gs and Gt necessary for bringing the phase error between the voltage phase and the current phase to be zero, based on the internal phase θs output from the power-supply voltage phase calculator 20 and the current detection signals Ir and It output from the current detector (current sensor) 8. In other words, the current controller 25 determines duty-ratio command values (Khr, Khs and Kht) necessary for bringing the three-phase current of the three-phase alternating-current power supply 1 to be an ideal sine wave current. Note that the current detector 8 needs to only detect at least the phase current of two phases of the R phase, the S phase and the T phase.

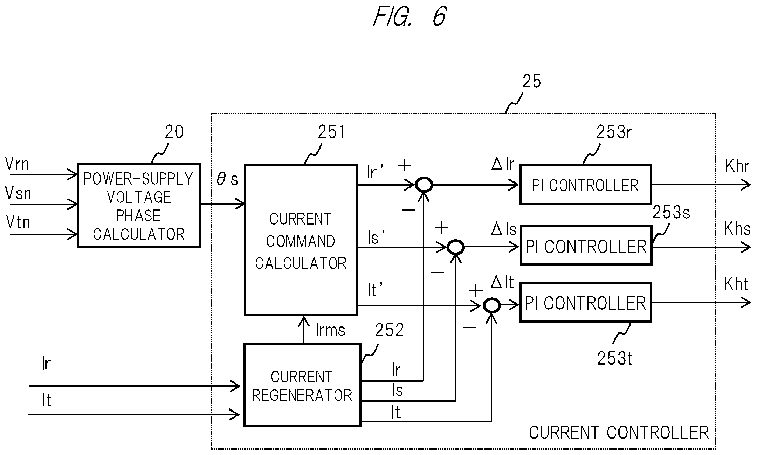

FIG. 6 is a diagram showing a detailed configuration example of the current controller in FIG. 3. The current controller 25 shown in FIG. 6 includes a current command calculator 251, a current regenerator 252 and PI controllers 253r, 253s and 253t. The current regenerator 252 calculates a current detection signal Is of remaining one phase except for the current detection signals Ir and It (specifically, digital signals output through the analog-digital converter) of the two phases. In other words, since summation of the current detection signals Ir, Is and It of the three phases becomes zero, the current regenerator 252 can calculate the current detection signal Is (= - Ir - It) of the remaining one phase. Also, the current regenerator 252 calculates a current value (such as an effective value Irms) of the three-phase current flowing in the three-phase alternating-current power supply 1, based on the current detection signals Ir, Is and It of the three phases.

The current command calculator 251 generates three-phase current commands Ir', Is' and It' (specifically, digital signals changing in time series) representing the ideal sine wave currents of the three phases, based on the internal phase θs output from the power-supply voltage phase calculator 20 and the current value (the effective value Irms) of the three-phase current detected by the current regenerator 252 (eventually the current detector 8). The PI controllers (duty-ratio controllers) 253r, 253s and 253t perform the PI control based on errors ΔIr, ΔIs and ΔIt between the three-phase current commands Ir', Is' and It' and the current detection signals Ir, Is and It output from the current regenerator 252 (eventually the three-phase current detected by the current detector 8). As a result, the PI controllers 253r, 253s and 253t calculates modulation waves (the duty-ratio command values) Khr, Khs and Kht for bringing the errors ΔIr, ΔIs and ΔIt to be zero, respectively.

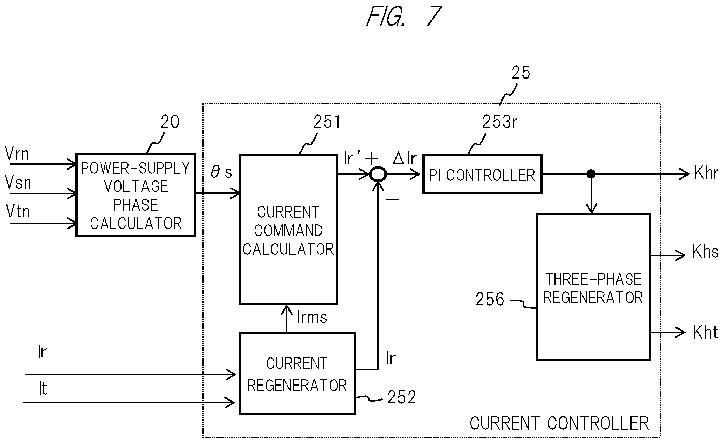

FIG. 7 is a diagram showing a modification example of FIG. 6. As shown in FIG. 7, the current controller 25 may calculate the modulation wave Khr by performing the PI control using the PI controller 253r as typified by any one phase (in this case, the R phase) of the three phases, and then, calculate the modulation waves Khs and Kht of the remaining two phases by using the three-phase regenerator 256. Specifically, the three-phase regenerator 256 generates the modulation wave Khs by advancing the phase of the modulation wave Khr by 120 degrees, and generates the modulation wave Kht by advancing it by 240 degrees.

### <<Modulation-Wave Multiplier>>

The PI controller (voltage controller) 21 of FIG. 3 calculates a modulation-wave gain (manipulation amount) Kv for bringing an error Vds to be zero by performing the PI control based on this error Vdc being between a preset voltage command value Vdc* and a voltage value (that is an analog-digital converted digital value) represented by the voltage detection signal Vdc output from the external terminal Pd. The modulation-wave multiplier 22 puts weight on the modulation waves (duty-ratio command values) Khr, Khs and Kht output from the current controller 25, by the modulation-wave gain Kv output from the PI controller 21, and then, outputs the weighted values to the PWM controller 23.

Specifically, if the voltage value represented by the voltage detection signal Vdc is smaller than the voltage command value Vdc*, the PI controller 21 makes the modulation-wave gain Kv large. The modulation-wave multiplier 22 makes the multiplied modulation waves Khr', Khs' and Kht' to be output to the PWM controller 23 large, by multiplying the modulation waves Khr, Khs and Kht by this modulation-wave gain Kv. On the other hand, if the voltage value represented by the voltage detection signal Vdc is larger than the voltage command value Vdc*, the PI controller 21 makes the modulation-wave gain Kv small, and the modulation-wave multiplier 22 accordingly makes the multiplied modulation waves Khr', Khs' and Kht' small. In these manners, the output voltage VCC is controlled to be the voltage command value Vdc*.

### <<PWM Controller>>

The PWM controller 23 of FIG. 3 generates PWM signals Gr', Gs' and Gt' of the three phases based on the multiplied modulation waves (duty-ratio command values) Khr', Khs' and Kht' output from the current controller 25 through the modulation-wave multiplier 22, and performs switching control on the bidirectional current-carrying switches SWr, SWs and Swt of the three phases by using the PWM signals. Specifically, the PWM controller 23 generates the PWM signals Gr', Gs' and Gt' by comparing the multiplied modulation waves Khr', Khs' and Kht' and the carrier wave (triangle wave or sawtooth wave) Fc generated by the carrier-wave generator 27. In this case, a frequency of the carrier wave Fc is determined to be, for example, a preset value in the microcomputer or others.

### <<Activation Method>>

The activation determiner 26 of FIG. 3 compares the preset activation determination value Ith and the current value (effective value Irms) of the three-phase current detected by the current detector (current sensor) 8 and calculated through the current controller 25, and outputs an internal activation signal 29a if the effective value Irms is larger than the activation determination value Ith. The activation determination value Ith is defined to be a value depending on, for example, a rated current value of a system, based on the standards of harmonic-wave regulations of IEC.

An external activation signal 29b of FIG. 3 is input from the monitor 16 of FIG. 1 through the external terminal Pc. The activation-method switch 28 asserts an activation signal 29c in response to either the internal activation signal 29a output from the activation determiner 26 or the externally-input external activation signal 29b. In this case, the activation-method switch 28 determines which one of the internal activation signal 29a and the external activation signal 29b is to be selected, based on, for example, a selection signal input from the monitor 16 through the external terminal Pc, a selection switch mounted on a wiring board configuring the converter apparatus 4 or others.

The converter controller 7 of FIG. 3 enables the bidirectional switch circuit 6 to perform the switching control in response to the activation signal 29c (the internal activation signal 29a or the external activation signal 29b). In this example, the interrupter 24 is arranged. If the activation signal 29c is asserted, the interrupter 24 outputs the PWM signals Gr', Gs' and Gt' output from the PWM controller 23, as the PWM signals Gr, Gs and Gt. On the other hand, if the activation signal 29c is negated, the interrupter 24 interrupts the output of the PWM signals Gr', Gs' and Gt', and fixes the PWM signals Gr, Gs and Gt to an OFF level.

The activation-method switch 28 may output the activation signal 29c by using both the internal activation signal 29a and the external activation signal 29b. For example, even when the activation signal 29c is asserted in response to the assertion of the internal activation signal 29a, if the external activation signal 29b is negated (in other words, if an external interruption signal is input), the activation-method switch 28 may negate the activation signal 29c, and disable it to perform the switching control.

As a result, in a normal operation period of the power conversion system of FIG. 1 (eventually a period where the converter controller 7 performs the switching control in response to the internal activation signal 29a), protection or others can be achieved by emergency stop of the operation of the converter controller 7 when anomaly such as overcurrent occurs in the inverter 13. Specifically, when detecting the anomaly of the inverter 13 through the inverter controller 12, the monitor 16 needs to only negate the external activation signal output to the converter controller 7 (in other words, needs to only output the external interruption signal).

Further, the activation determiner 26 of FIG. 3 can determine the activation based on a signal output from the power-supply voltage phase calculator 20. Specifically, as described in FIGs. 4 and 5, an anomaly detector for detecting the anomaly such as the three-phase imbalance of the power supply and the phase lack of the power supply based on the signal output from the power-supply voltage phase calculator 20 can be separately arranged. This anomaly detector may be mounted in, for example, the activation determiner 26.

In this case, when the anomaly is detected by the anomaly detector, the activation determiner 26 fixes the internal activation signal 29a to a negation level. Specifically, when the anomaly is detected by the anomaly detector, even if the effective value Irms is larger than the activation determination value Ith, the activation determiner 26 is configured not to assert the internal activation signal 29a (eventually the activation signal 29c). When the anomaly is detected by the anomaly detector while the internal activation signal 29a has been already asserted, the activation determiner 26 is configured to negate the internal activation signal 29a (eventually the activation signal 29c).

Note that the interrupter 24 only needs to be the one capable of enabling/disabling the bidirectional switch circuit 6 to perform the switching control, and does not particularly need to be arranged on an output side of the converter controller 7. For example, the interrupter 24 may disable it to perform the switching control by interrupting the input of the internal phase θs to the current controller 25, or may disable it to perform the switching control by disabling the operation of the entire converter controller 7.

Alternatively, for example, in FIG. 1 without the monitor 16, the converter controller 7 may be operated by only the internal activation signal 29a while the inverter controller 12 may be independently operated. Alternatively, without the monitor 16, the converter controller 7 and the inverter controller 12 can be also configured to directly communicate with each other.

### <<Voltage Rising Operation>>

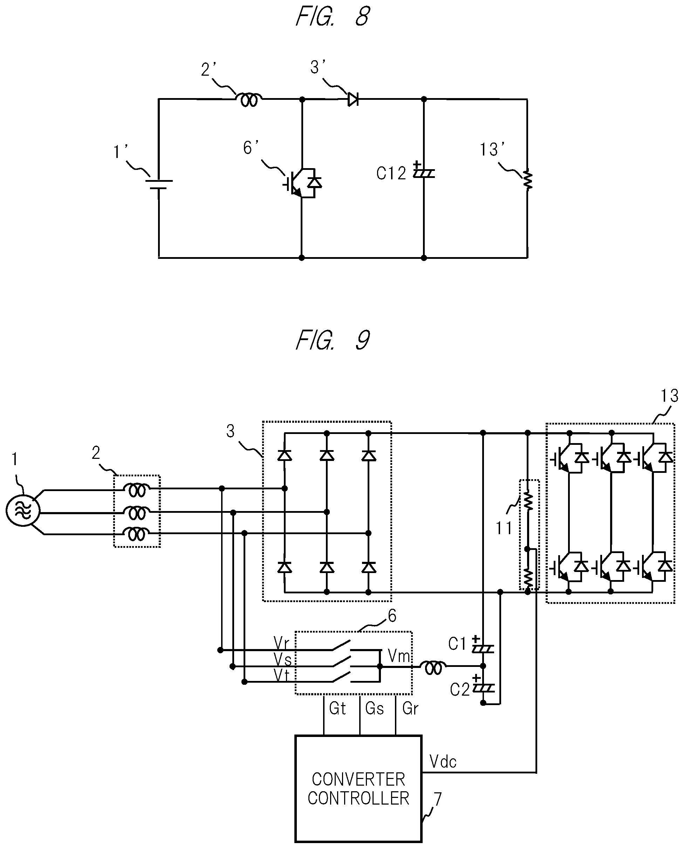

When the power conversion system of FIG. 1 is used, the voltage rising operation is also achieved by, for example, setting the voltage command value Vdc* of FIG. 3 to be higher than the value of the regular output voltage VCC determined based on a voltage amplitude of the three-phase alternating-current power supply 1 or others. FIG. 8 is a circuit diagram showing a configuration example of a general voltage rising circuit. The voltage rising circuit shown in FIG. 8 includes a direct-current power supply 1', a reactor 2', a switching element 6', a diode 3' and a smoothing capacitor C12, and supplies a voltage higher than a voltage of the direct-current power supply 1' to a resistor 13' that is a load.

This voltage rising circuit performs the voltage rising operation by accumulating the power into the reactor 2' during the ON period of the switching element 6' while transmitting the power accumulated in the reactor 2' to the smoothing capacitor C12 through the diode 3' used for preventing the current flowback during the OFF period of the switching element 6'. A voltage rising performance in this case is determined based on an operation frequency of the switching element 6', an inductance value of the reactor 2' and an amount of the current flowing in the reactor 2'. In other words, if it is necessary to actively rise the voltage, the operation frequency of the switching element 6' may be increased, the inductance value may be increased, or the amount of the current flowing in the reactor 2' may be increased.

To a practical circuit, it is difficult to apply the method of changing the inductance value of the reactor 2' since a wiring work is necessary during the operation. Accordingly, practically, it is desirable to apply the method of increasing the amount of the current flowing in the reactor 2' or the method of increasing the operation frequency of the switching element 6'. In the former method, the ON time of the switching element 6' may be controlled to be appropriately long while the voltages on both ends of the smoothing capacitor C12 are monitored.

FIG. 9 is a diagram resulted from picking up the voltage rising circuit portion from the power conversion system in FIG. 1. The reactor 2', the switching element 6', the diode 3', the smoothing capacitor C12 and the resistor 13' in FIG. 8 correspond to a three-phase alternating-current reactor 2, a bidirectional switching circuit 6, a three-phase diode bridge 3, smoothing capacitors C1 and C2 and an inverter 13 in FIG. 9, respectively.

Since a power conversion system of FIG. 9 includes the same components as those of the voltage rising circuit of FIG. 8 as described above, the voltage rising operation can be performed by the same operating principle. Difference between FIGs. 8 and 9 is that the direct-current power supply 1' is replaced with the three-phase direct-current power supply 1. If the three-phase direct-current power supply 1 is used, a circuit to be increased in terms of a voltage is switched for each phase in accordance with a phase of the three-phase direct-current power supply 1, and the operation is an alternately-repeating voltage rising operation. In this case, the modulation-wave multiplier 22 of FIG. 3 rises the output voltage VCC by putting weight on the modulation waves (duty-ratio command values) Khr, Khs and Kht in accordance with the error between the voltage command value Vdc* and the voltage value represented by the voltage detection signal Vdc.

### <Main Effect of First Embodiment>

The highly-versatile converter apparatus capable of suppressing the harmonic-wave current can be achieved as the first effect by using the method of the first embodiment when being combined with each of various power conversion systems. As a specific example, a case of a previously-unified power conversion system of FIG. 1 is presumed. In this case, the smoothing capacitor Co of FIG. 1 may be replaced with the configuration such as the smoothing capacitors C1 and C2, and the inverter controller 12 or others may appropriately activate the converter controller 7 in accordance with the detected load current.

Meanwhile, it is presumed that the converter apparatus 4 is embedded at a later stage to the existing system in which the converter apparatus 4 is eliminated from the power conversion system of FIG. 1. In this case, in order to appropriately activate the converter controller 7, the inverter controller 12 or others needs to output the activation signal to the converter controller 7. However, the existing system does not always include such a mechanism that outputs the activation signal. On the other hand, even in the case without the external input of the activation signal, the converter apparatus 4 of FIG. 1 can perform the activation based on its own determination because of including the current detector (current sensor) 8, the activation determiner 26 of FIG. 3 and others.

One end of the bidirectional switch circuit 6 is connected to the midpoint node Nm of the smoothing capacitors C1 and C2. However, the existing system including the smoothing capacitor Co may be difficult to provide such a midpoint node Nm. On the other hand, the converter apparatus 7 of FIG. 1 can provide the midpoint node Nm by itself because of including the smoothing capacitors C1 and C2. In this manner, the highly-versatile converter apparatus can be achieved.

As a second effect, the period of the suppression of the harmonic wave can be appropriately determined. Specifically, according to the harmonic-wave regulations, the harmonic wave in the power supply current of the three-phase alternating-current power supply 1 needs to be regulated, and therefore, it is desirable to accurately detect this power supply current in order to appropriately determine the period of the suppression of the harmonic wave. When the converter apparatus 4 of FIG. 1 is used, this power supply current can be accurately detected at a position of the current detector 8.

Meanwhile, in the case of the output of the activation signal from the inverter controller 12 as described above as the comparison object, the power supply current of the three-phase alternating-current power supply 1 is estimated based on, for example, the output power of the inverter 3 (an input voltage of the inverter 3 or an output current of the inverter 3). In other words, the inverter controller 12 generally outputs the activation signal based on a result of sensor's detection of the input voltage of the inverter 3 or the output current of the inverter 3. However, practically, a relation between the power supply current of the three-phase alternating-current power supply 1 and the output power of the inverter 3 varies depending on a power conversion efficiency, a power factor or others, and therefore, the power supply current of the three-phase alternating-current power supply 1 is not always accurately estimated.

Further, as a third effect, the effect of the suppression of the harmonic wave can be easily enhanced by using the current detector 8. For example, a mechanism that previously determines how to change the duty ratio for bringing the current waveform to be the sine wave through simulation or others without the current detection and that previously registers the change method in a table or others is exemplified. In this case, if various driving conditions change, optimal values to be registered in the table may also change, and therefore, the table may need to be appropriately edited. On the other hand, the converter apparatus 7 of FIG. 1 causes the current controller 25 of FIG. 3 to calculate the appropriate duty ratio while causing the current detector 8 to directly observe the current waveform, and therefore, the current waveform can be appropriately brought to the sine wave even if various driving conditions change.

### (Second Embodiment)

### <Details of Converter Controller>

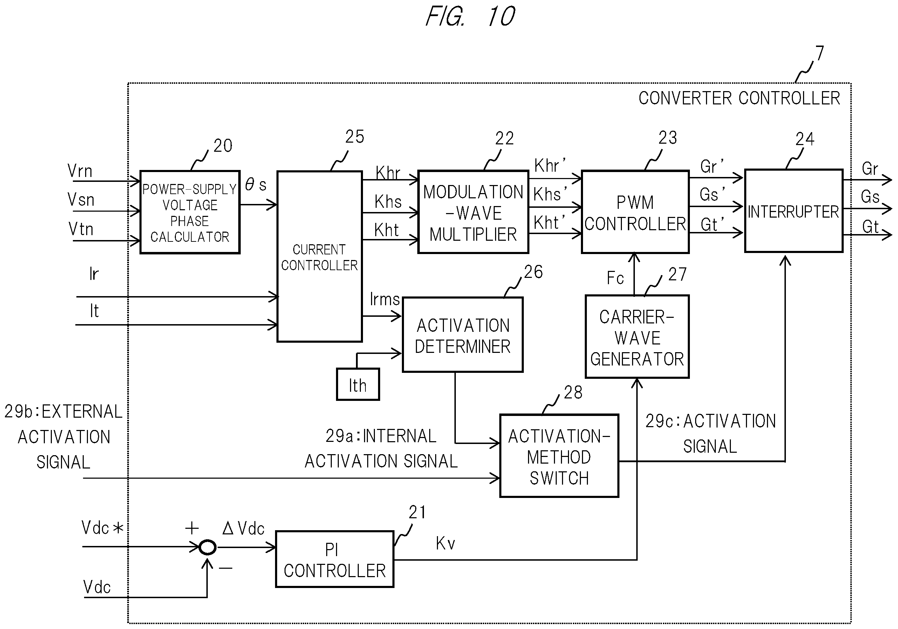

FIG. 10 is a block diagram showing a configuration example of the converter controller of FIG. 1 in a converter apparatus according to a second embodiment of the present invention. In the above-described configuration example of FIGs. 3 and 9, the modulation-wave multiplier 22 adjusts the duty ratio by putting weight on the modulation waves Khr, Khs and Kht by the modulation-wave gain (manipulation amount) Kv output from the PI controller (voltage controller) 21, and the output voltage VCC is constantly controlled by the adjustment. On the other hand, in the configuration example of FIG. 10, the output voltage VCC is constantly controlled by changing the frequency of the carrier wave Fc used in the PWM controller 23, based on the modulation-wave gain Kv output from the PI controller 21.

The configuration example of FIG. 10 is different from the configuration example of FIG. 3 in a destination of the output of the modulation-wave gain Kv from the PI controller 21. In FIG. 10, since the carrier-wave generator 27 controls the operation frequency based on this modulation-wave gain Kv, the frequency of the carrier wave Fc (eventually the switching frequency of the bidirectional switch circuit 6) is changed based on this modulation-wave gain Kv. Specifically, when the voltage value represented by the voltage detection signal Vdc is smaller than the voltage command value Vdc*, the modulation-wave gain Kv is large, and the frequency of the carrier wave Fc is high. Conversely, when the voltage value represented by the voltage detection signal Vdc is larger than the voltage command value Vdc*, the modulation-wave gain Kv is small, and the frequency of the carrier wave Fc is low.

### <Main Effects of Second Embodiment>

Even when the above-described method of the second embodiment is used, the same effects as the above-described various effects of the first embodiment can be provided. The method of fixing the frequency of the carrier wave Fc to control the duty ratio as described in the method of the first embodiment suppresses the switching loss or others, but reduces the accuracy of bringing the current waveform to the sine wave in some cases. On the other hand, the method of the second embodiment can improve the accuracy of bringing the current waveform to the sine wave, and enhance the effect of the suppression of the harmonic wave.

In the foregoing, the invention made by the present inventors has been concretely described on the basis of the embodiments. However, the present invention is not limited to the foregoing embodiments, and various modifications can be made within the scope of the present invention. For example, the above-described embodiments have been explained in detail for easily understanding the present invention, and are not always limited to the one including all structures explained above. Also, a part of the structure of one embodiment can be replaced with the structure of another embodiment, and besides, the structure of another embodiment can be added to the structure of one embodiment. Further, another structure can be added to/eliminated from/replaced with a part of the structure of each embodiment.

### EXPLANATION OF REFERENCE SIGNS

1 three-phase alternating-current power supply
2 three-phase alternating-current reactor
3 three-phase diode bridge
4 converter apparatus
7 converter controller
8 current detector (current sensor)
12 inverter controller
13 inverter
16 monitor
20 power-supply voltage phase calculator
21 PI controller (voltage controller)
22 modulation-wave multiplier
23 PWM controller
25 current controller
26 activation determiner
27 carrier-wave generator
29a internal activation signal
29b external activation signal
C1, C2, Co smoothing capacitor
Fc carrier wave
Gr, Gs, Gt PWM signal
Ith activation determination value
Khr, Khs, Kht modulation wave (duty-ratio command value)
Kv modulation-wave gain (manipulation amount)
Nm midpoint node
Pr1, Ps1, Pt1, Pr2, Ps2, Pt2, Pp, Pn, Pd, Pc external terminal
SWr, SWs, SWt bidirectional current-carrying switch
VCC output voltage (direct-current voltage)
Vdc voltage detection signal
Vdc* voltage command value
θs internal phase

## Claims

1. A converter apparatus applied to a power conversion system including: a three-phase diode bridge rectifying a three-phase alternating-current power supply received; and a three-phase alternating-current reactor inserted in a current path between the three-phase alternating-current power supply and the three-phase diode bridge, the converter apparatus suppressing a harmonic wave current occurring in the three-phase alternating-current power supply, comprising:
a first external terminal and a second external terminal connected to a pair of output nodes of the three-phase diode bridge, respectively;
a first smoothing capacitor connected between the first external terminal and a midpoint node;
a second smoothing capacitor connected between the second external terminal and the midpoint node;
a current sensor detecting a three-phase current of the three-phase alternating-current power supply;
bidirectional current-carrying switches of three phases arranged between the midpoint node and nodes of the three-phase alternating-current reactor close to the three-phase diode bridge, respectively; and
a converter controller performing switching control on the bidirectional current-carrying switches of three phases,
wherein the converter controller includes an activation determiner comparing a preset activation determination value and a current value of the three-phase current detected by the current sensor, and outputting an internal activation signal when the current value exceeds the activation determination value, and the converter controller enables the switching control in response to the internal activation signal.

2. The converter apparatus according to claim 1 further comprising:
a third external terminal to which an external activation signal is input,
wherein the converter controller enables the switching control in response to either the internal activation signal or the external activation signal.

3. The converter apparatus according to claim 1 further comprising:
a third external terminal to which an external activation signal is input,
wherein the converter controller disables the switching control in response to negation of the external activation signal.

4. The converter apparatus according to claim 1 further comprising:
a fourth external terminal and a fifth external terminal sequentially arranged on a current path between the three-phase alternating-current reactor and the there-phase diode bridge,
wherein the current sensor is arranged between the fourth external terminal and the fifth external terminal, and
one end of the bidirectional current-carrying switches of the three phases is connected to the fourth external terminal through the current sensor.

5. The converter apparatus according to claim 1,
wherein the converter controller further includes:
a power-supply voltage phase calculator generating an internal phase synchronizing with a voltage phase of the three-phase alternating-current power supply;
a current controller calculating a duty-ratio command value necessary for bringing the three-phase current to be an ideal sine wave current, based on the internal phase generated by the power-supply voltage phase calculator and the three-phase current detected by the current sensor; and
a PWM controller generating PWM signals of three phases based on the duty-ratio command value output from the current controller, and performing switching control on the bidirectional current-carrying switches of three phases by using the PWM signals of three phases.

6. The converter apparatus according to claim 5 further comprising:
a sixth external terminal to which a voltage detection signal is input, the voltage detection signal taking a voltage of the output node of the three-phase diode bridge as a detection target;
a voltage controller calculating, based on an error between a voltage value represented by the voltage detection signal and a preset voltage command value, a manipulation amount for bringing the error to be zero; and
a modulation-wave multiplier putting weight on the duty-ratio command value output from the current controller by the manipulation amount output from the voltage controller, and then, outputting the weighted value to the PWM controller.

7. The converter apparatus according to claim 5 further comprising:
a sixth external terminal to which a voltage detection signal is input, the voltage detection signal taking a voltage of the output node of the three-phase diode bridge as a detection target;
a voltage controller calculating, based on an error between a voltage value represented by the voltage detection signal and a preset voltage command value, a manipulation amount for bringing the error to be zero; and
a carrier-wave generator generating a carrier wave used in the PWM controller, and changing a frequency of the carrier wave, based on the manipulation amount output from the voltage controller.

8. A power conversion system comprising:
a three-phase diode bridge rectifying a three-phase alternating-current power supply received;
a third smoothing capacitor smoothing an output voltage of the three-phase diode bridge;
a three-phase alternating-current reactor inserted in a current path between the three-phase alternating-current power supply and the three-phase diode bridge; and
a converter apparatus suppressing a harmonic wave current occurring in the three-phase alternating-current power supply,
wherein the converter apparatus includes:
a first external terminal and a second external terminal connected to a pair of output nodes of the three-phase diode bridge, respectively;
a first smoothing capacitor connected between the first external terminal and a midpoint node;
a second smoothing capacitor connected between the second external terminal and the midpoint node;
a current sensor detecting a three-phase current of the three-phase alternating-current power supply;
bidirectional current-carrying switches of three phases arranged between the midpoint and a node of the three-phase alternating-current reactor close to the three-phase diode bridge; and
a converter controller performing switching control on the bidirectional current-carrying switches of three phases,
wherein the converter controller includes an activation determiner comparing a preset activation determination value and a current value of the three-phase current detected by the current sensor, and outputting an internal activation signal when the current value exceeds the activation detection value, and the converter controller enables the switching control in response to the internal activation signal.

9. The power conversion system according to claim 8 further comprising:
an inverter including a plurality of switching elements and converting a direct-current voltage generated in the output node of the three-phase diode bridge into a three-phase alternating-current voltage;
an inverter controller performing switching control on the plurality of switching elements inside the inverter; and
a monitor monitoring an operation of the inverter controller;
wherein the converter apparatus includes a third external terminal that is a communication terminal to the monitor.

10. The power conversion system according to claim 9,
wherein an external activation signal is input to the third external terminal, and
the converter controller disables the switching control in response to negation of the external activation signal.
